Europäisches Patentamt

(19) European Patent Office

Office européen des brevets

(11) Publication number: **0 324 855**

**A1**

(12) # EUROPEAN PATENT APPLICATION

published in accordance with Art. 158(3) EPC

(21) Application number: 87905793.3

(22) Date of filing: 07.09.87

Data of the international application taken as a basis:

(86) International application number:
PCT/JP87/00664

(87) International publication number:
WO88/02112 (24.03.88 88/07)

(51) Int.Cl.³: **G 01 N 29/04**

(30) Priority: 08.09.86 JP 209464/86
08.09.86 JP 209467/86

(43) Date of publication of application:
26.07.89 Bulletin 89/30

(84) Designated Contracting States:
DE GB IT NL

(71) Applicant: HITACHI CONSTRUCTION MACHINERY CO.,
LTD.
6-2, Ohtemachi 2-chome
Chiyoda-ku Tokyo 100(JP)

(72) Inventor: TAKEDA, Sakae
3575-17, Kandatsumachi Tsuchiura-shi
Ibaraki 300(JP)

(74) Representative: Wagner, Karl H. et al,
WAGNER & GEYER Patentanwälte
Gewuerzmuehlstrasse 5 Postfach 22 14 39
D-8000 München 22(DE)

(54) METHOD AND APPARATUS FOR ULTRASONIC FLAW DETECTION.

(57) Method and apparatus for ultrasonic flaw detection wherein a trigger signal is generated when the level of surface echo of a sample to be inspected immersed in a liquid has exceeded a preset threshold value, a first pulse being generated lagged by a predetermined period of time ($td_1$) via a first delay line (31) behind the position where said trigger signal is generated, a gate pulse is opened by the rise of the first pulse, a second pulse being generated lagged by a predetermined period of time ($td_2$) via a second delay line (32) behind the position where the first pulse rises, and said gate pulse being closed at the time when the second pulse is generated, whereby the width ($Pc$) of the obtained gate pulse becomes equal to the delay time ($td_2$) obtained by the second delay line, and is further brought into agreement with the width of a defective echo that is to be inspected.

# FIG. 1

Trigger signal → **First delay line** (31) → **Second delay line** (32)

First pulse ←

Second pulse ←

**Gate pulse output device** (33)

Gate pulse

# FIG. 2

(a) Echo

(b) Delayed trigger pulse

(c) Trigger signal

(d) First pulse

(e) Second pulse

(f) Gate pulse

0324855

SPECIFICATION


Ultrasonic Method and Apparatus

for Flaw Detection


TECHNICAL FIELD

The present invention relates to an ultrasonic method and apparatus for detecting internal flaws possibly existent in materials and products, and more particularly to an ultrasonic method and apparatus suitably usable for inspecting an object for any flaw possibly included in the object and near the surface of thereof and plural fine flaws possibly included in the proximity of each other in the direction of the thickness of the object.

The objects to which the present invention is applicable include materials and products, such as metallic materials, nonmetallic materials like ceramics, glass, etc., and electronic parts such as ICs and LSIs through which the ultrasound can be propagated.


BACKGROUND ART

Heretofore, many methods have been proposed and adopted in various industrial fields to detect flaws included in thin industrial materials or products, and flaws included in an object, not so thin, in the proximity of the surface thereof (such flaws will be referred to as "surface flaw" herein-

0324855

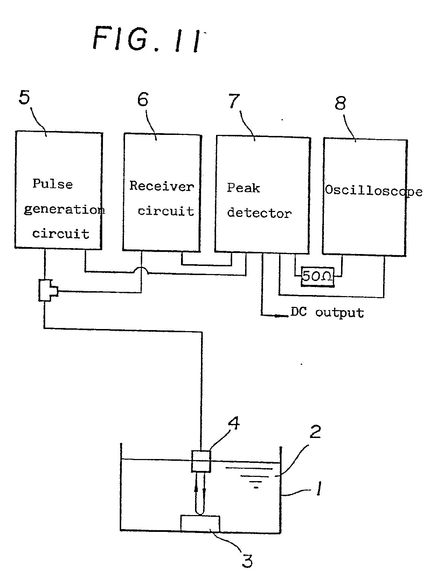

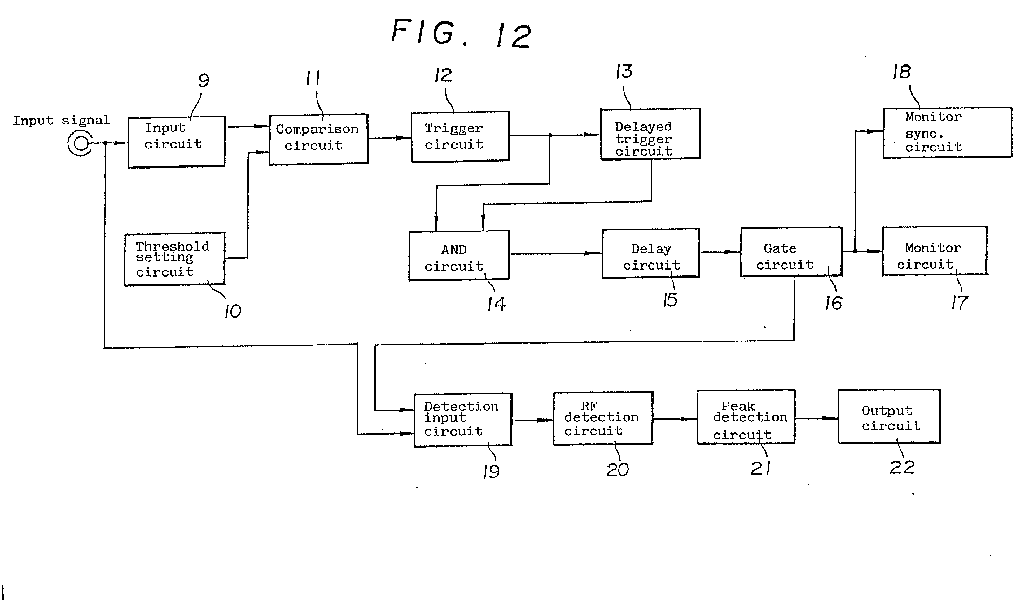

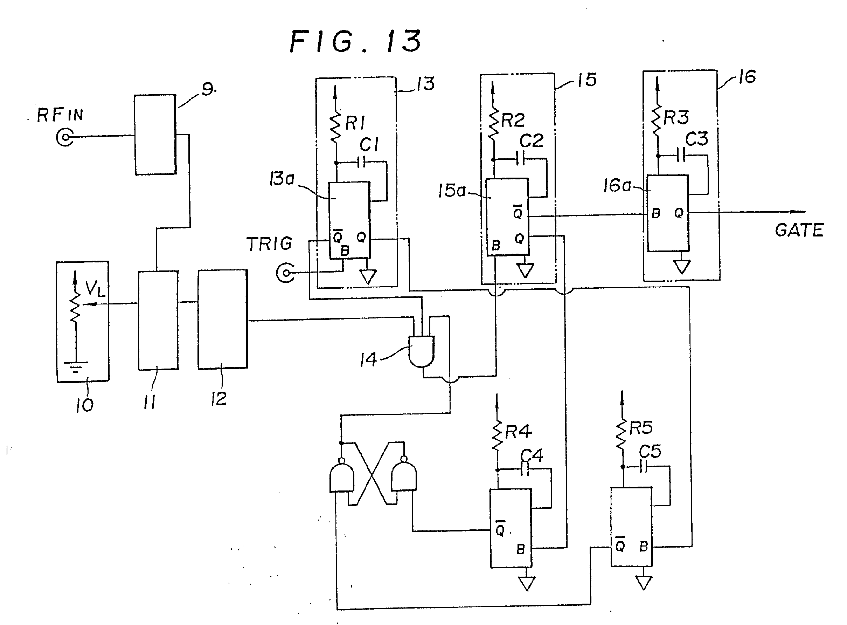

hereinafter). In order to ensure the considerably high performance and functions of new materials and electronic products as compared with the conventional techniques, it has been more strictly required for these methods for flaw detection that any surface flaws in such materials and products and nearer to the surface thereof and fine flaws can be positively detected. A typical one of the conventional methods and apparatuses for flaw detection will be described below with reference to Figs. 11 to 14. Fig. 11 is an explanatory drawing of an ultrasonic flaw detector. In this Figure, the reference numeral 1 indicates a water bath filled with water 2, 3 indicates an thin material as object placed on the bottom of the water bath 1, and 4 indicates a probe immersed in water 2. The reference numeral indicates a pulse generation circuit which produces ultrasound pulses, 6 indicates a receiver circuit to receive and amplify the reflected ultrasound wave from the surface of the object 3, flaw therein and the bottom thereof through the probe 4, 7 indicates a peak detector which detects the peak value of the reflected ultrasound wave amplified by the receiver circuit 6 and provides as a flaw information a DC voltage proportional to the peak value, and 8 indicates a processor which receives and processes a signal delivered from the peak detector 7. In Fig. 11, an oscilloscope which displays the waveform of the output signal from the peak detector 7 is used as the processor. Fig. 12 is a schematic block diagram of the above-mentioned peak detector 7, and Fig. 12 shows, by way of example, the detail of the essential portion of the peak detector 7. The reference numeral 9 indicates an input circuit to which an RF signal of the reflected ultrasound wave amplified by the aforementioned receiver circuit 6 is supplied, 10 indicates a threshold setting circuit to set a threshold of signal level, 11 indicates a comparison circuit in which an output signal from the input circuit 9 is compared with a threshold set by the threshold setting circuit 10, 12 indicates a trigger circuit which generates a trigger signal to provide a trigger when the output signal from the input circuit 9 compared with the threshold in the comparison circuit 11 exceeds the threshold, 13 indicates a delayed trigger circuit which is tripped by the trigger signal from the trigger circuit 12, when the level of the transmitted pulse T from the aforementioned probe 5 exceeds the threshold, and sets the width of a delayed trigger pulse, 14 indicates an AND circuit which receives three signals, that is, the trigger signal from the trigger circuit 12, pulse signal from the delayed trigger circuit 13 and a signal derived from the passage of the pulse signal through a flip-flop and produces a pulse resulted from ANDing of these three signals, 15 indicates a delay circuit which receives an output pulse from the AND circuit 14 and sets the width of a delayed pulse, 16 indicates a gate circuit which can set a gate pulse to a selected point and width, and 17 and 18 indicate a monitor circuit and monitor sync circuit, respectively, which provide the output pulse from the gate circuit 16 to the oscilloscope 8. The reference numeral 19 indicates a detection input circuit which matches the RF signal of the reflected wave amplified by the aforementioned receiver circuit 6 and the output pulse from the gate circuit 16, 20 indicates an RF detection circuit which detects the RF signal from the detection input circuit 19, 21 indicates a peak detection circuit which converts the output signal from the RF detection circuit 20 to a DC voltage proportional to the value of the output signal and maintains the value until the gate pulse from the gate circuit 16 turns off, and 22 indicates an output circuit which delivers the above-mentioned DC voltage as an flaw information.

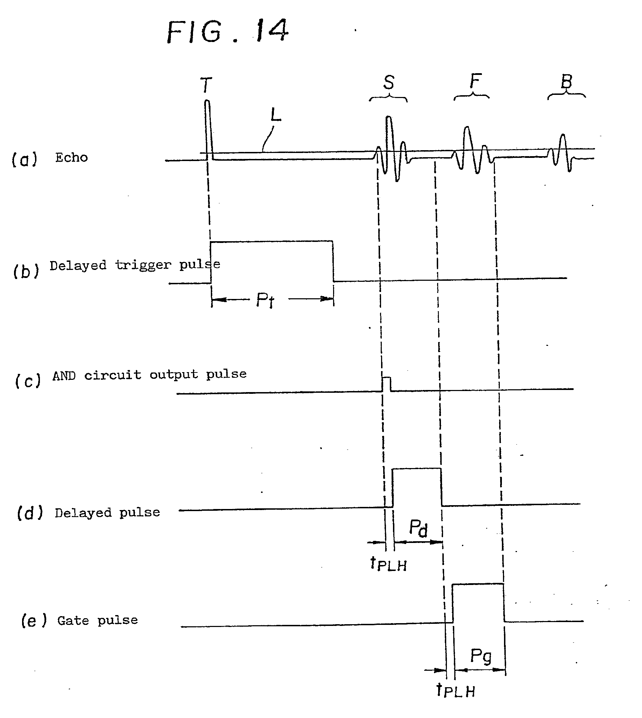

Fig. 14 is a characteristic diagram of the pulses obtained when an object is inspected by the aforementioned flaw detector. In this Figure, (a) indicates an example echo pattern of the reflected wave from the object 3, T indicates a transmitted pulse, S indicates a surface echo, F indicates a flaw echo, and B indicates a bottom echo. L indicates a line indicative of a threshold for the levels of the transmitted pulse T and each echoes. (b) indicates a delayed trigger pulse having a width $P_t$ set by the delayed trigger circuit 13, (c) indicates an output pulse delivered from the AND circuit 14, which rises when the surface echo S exceeds the threshold L, (d) indicate a delayed pulse having a width $P_d$ set by the delay circuit 15 and (e) indicates a gate pulse having a width $P_g$ set by the gate circuit 16.

The pulse characteristic diagram shown in Fig. 14 is obtained from the following actions: Namely, when the level of the pulse T transmitted from the probe 4 exceeds the threshold L, the delayed trigger circuit 13 is tripped by the trigger signal from the trigger circuit 12 and the width $P_t$ of the delayed trigger pulse is set. Next, when the level of the surface echo S exceeds the threshold L, the AND circuit is tripped, then the delay circuit 15 and gate circuit 15 are tripped. Thus a sequence of flaw detecting operations begins. When the width $P_g$ of the delayed pulse ends, the gate is opened nearly simultaneously. The gate is closed after the pulse width $P_g$ ends. In this case, for the gate pulses to be produced always following up with the surface echo during a flaw detection, the period of time during which the delayed trigger pulse is on is controlled so that the operation sequences of the delay and gate circuits will not be started.

The aforementioned delayed trigger circuit 13, delay circuit 15 and gate circuit 16 have a one-shot multivibrators 13a, 15a and 16a, respectively. These multivibrators 13a, 15a and 16a work as delayed a time $t_{PLH}$ for pulse propagation from input of a pulse to them until they deliver their output signals. More particularly, the delayed pulse (d) in Fig. 14 does not rise when the level of the surface echo S has exceeded the threshold L but rises as delayed the time for pulse propagation $t_{PLH}$ in practice. Similarly, the gate pulse (e) shown in Fig. 14 does not turn on at the same time as the fall of the delayed pulse but turns on as delayed the pulse propagation time $t_{PLH}$ in practice. The length of this propagation delay time $t_{PLH}$ depends upon the circuit configuration of the multivibrator, but it is said to be nearly 20 to 70 ns. Generally, it is about 30 ns at a temperature of 20°C. On the other hand, the minimum values of the pulse width $P_d$ and $P_g$ settable by the delay circuit 15 and gate circuit 16, respectively, having each a multivibrator are limited to about 60 to 80 ns at present in view of the circuit capacity. Thus, it will take at least a time of $(2t_{PLH} + P_g)$ = 120 to 140 ns from when the level of the surface echo S has exceeded the threshold L until the gate pulse (e) in Fig. 14 turns on (under the assumption that $t_{PLH}$ is 30 ns). This time length corresponds to a pulse propagation distance of about 350 to 400 μm in case of the object made of a steel, for example while it corresponds to a pulse propagation distance of about 200 to 230 μm in case of the object made of gold. Even under the assumption that the propagation delay time $t_{PLH}$ of the multivibrator is zero, the minimum pulse width $P_d$ and $P_g$ settable as in the above are about 60 to 80 ns, respectively. Therefore, the pulse propagation distance corresponding to this pulse width is about 200 μm in a steel.

Hence, in case of an object made of a steel, a flaw existent at a depth of more than about 350 μm from the surface of the object (more than 200 μm even when the aforementioned propagation delay time $t_{PLH}$ is not taken in account) can be detected. However, a surface flaw included in the object and at a depth smaller than the above as well as a flaw included in an extremely thin object of less than about 350 μm in thickness cannot be detected. This is because the surface echo S and flaw echo F will appear as superposed or extremely near each other so that the above limitations will apply although the gate pulse can be set to a selected point and width by the above-mentioned gate circuit 16 and thus it is not possible to develop only the flaw echo F within the width $P_g$ of the gate pulse. Also any fine flaws included in the object and beneath the object surface in the direction of the thickness cannot be detected. If the object under flaw detection is sufficiently thick and in case plural flaws are existent at a point sufficiently deep from the object surface in the direction of the object's thickness, the flaws cannot be detected for the same reason as in the above unless they are spaced more than 350 μm from each other (more than 200 μm in case the propagation delay time $t_{PLH}$ is not taken in account) since the flaws cannot be gated separately. Furthermore, even if it is tried to shorten to a minimum time of 100 ns (under the assumption that $t_{PLH}$ = 20 ns) to 120 ns the time from when the level of the aforementioned surface echo S has exceeded the threshold L until the gate pulse turns on, the rise of the gate pulse becomes unstable in practice due to a variation in configuration of the aforementioned circuits, internal change caused by a temperature change, etc. so that the flaw detection at that gate point cannot but be inaccurate.

As having been described in the foregoing, the conventional ultrasonic method and apparatus for flaw detection do not permit to detect a surface flaw or internal flaw in an extremely thin object as the case may be though it is really existent. Also, internal fine flaws existent near each other in an object in the direction of the thickness thereof cannot be detected separately in many cases. Anyway, these are the critical disadvantages of the conventional ultrasonic methods and apparatuses for flaw detection.

Accordingly, the present invention has a primary object to overcome the above-mentioned drawbacks of the conventional techniques by providing an ultrasonic method and apparatus for flaw detection which permit to positively detect any surface flaw and internal fine flaws in an extremely materials and products.

According to another object of the present invention, an ultrasonic method and apparatus for flaw detection can be provided which can detect plural fine flaws included in an object and near each other in the direction of the thickness of thereof as freely separated.

These and other objects and advantages of the present invention will be better understood from the ensuing description made, by way of example, of the preferred embodiments with reference to the drawings.

## DISCLOSURE OF THE INVENTION

The above objects can be attained by providing an ultrasonic method and apparatus, wherein a flaw detection is done using a gate pulse obtained through the steps of generating a trigger signal to provide a trigger when the level of a surface echo from an object under flaw detection immersed in a liquid has exceeded a preset threshold, generating a first pulse as delayed, by a first delay line, a predetermined time from the point where the trigger signal has been generated, turning on a gate pulse, with which a flaw echo is inspected, with the rise of the first pulse and simultaneously generating a second pulse as delayed, by a second delay line, a predetermined time from the rise point of the first pulse, and turning off the gate pulse simultaneously with the generation of the second pulse to provide a gate pulse with which the flaw detection is done.

The above-mentioned flaw detection according to the present invention utilizes the relation between two sets of delay lines provided in the peak detector, which will be described below. Namely, sequential use of two sets of delay lines which can delay the points of pulse generation a predetermined time as desired permits, via the first set of delay lines, to turn on the gate pulse with which the flaw echo is inspected at the rise point of the first pulse generated as delayed the predetermined time from the point where the trigger signal has been generated when the level of the surface echo from the object has exceeded the threshold and at the same time, via the second set of delay lines, to turn off the above-mentioned gate pulse at the point where the second pulse has been generated as delayed the predetermined time from the rise point of the above-mentioned first pulse, whereby the time between the on and off points of the gate pulse, that is, the width of the gate pulse, can be made equal to the aforementioned predetermined delay time due to the second set of delay lines and at the same time the width of the gate pulse be made to coincide with the width of a flaw echo to be inspected.

The time lengths of delay due to the first and second sets of delay lines vary depending upon the nature of the object under flaw detection (such as material, dimensions, shape, etc.), flaw depth from the surface of the object which is to be inspected, flaw detecting conditions such as probe frequency used and the like, and they vary from one object to another as the case may be even if they are nearly identical to each other in nature, flaw depth to be inspected and the similar respects as in case of ICs. Since so designed as to have the delay time changed stepwisely, the delay line can work within a permissible range. Thus, both the first and second delay lines may be a single line, respectively. However, in case the depth to be inspected among the above-mentioned flaw detecting conditions is large and so the time interval between the surface and flaw echoes is large, plural lines used for the first delay line are sequentially delayed up to a predetermined delay time and such stepwise delays are summed up to be the predetermined delay time, as the case may be. Depending on the relation between the width of a flaw echo and the delay time of the second delay line used, for example, if the width of the flaw echo is longer than the delay time of the delay line, or on the relation of the delay line with the flaw detecting conditions, plural lines are used also for the second delay line as in case of the first delay line, as the case may.

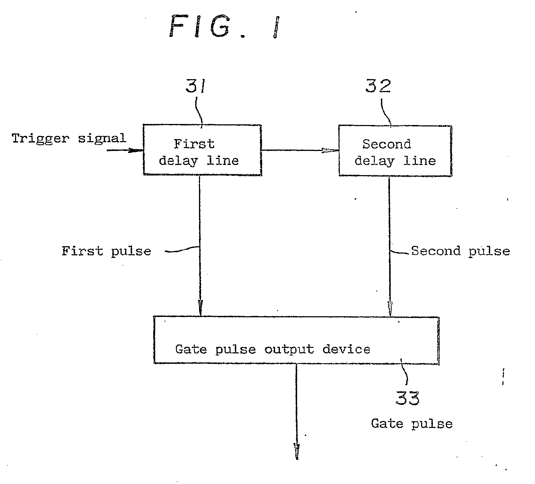

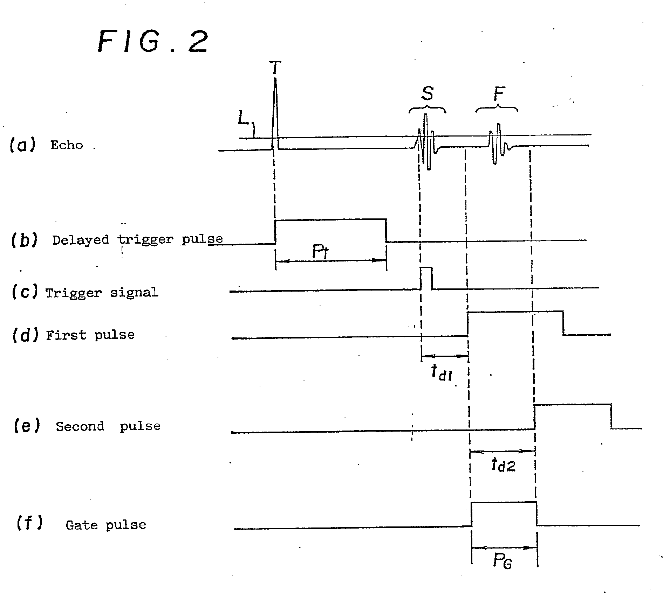

Next, the relation between the above-mentioned two sets of delay lines will be described in further detail with reference to Figs. 1 and 2. Fig. 1 is an explanatory drawing showing the correlation between the two sets of delay lines, and Fig. 2 is a characteristic diagram derived from the correlation shown in Fig. 1. First, as seen from Fig. 2 (b), when the level of a transmitted pulse T exceeds the threshold L, a trigger pulse is generated and sets the width $P_t$ of a delayed trigger pulse, and then when the surface echo S exceeds the threshold L, a trigger signal (c) shown in Fig. 14 is generated and supplied to a first delay line 31. On this first delay line 31, there is generated a first pulse (d) shown in Fig. 2, as delayed a predetermined time $t_{d1}$ from the point where the supplied trigger signal has been generated. The first pulse is delivered to a second delay line 32 and also to a gate pulse output device 33. On the second delay line 32, there is generated a second pulse (e) as shown in Fig. 2 by delaying the first pulse a predetermined time $t_{d2}$ from the point where the first pulse has been generated. The second pulse is delivered to the gate pulse output device 33. This gate pulse output device 33 consists of a logic circuit and inverter in which the first and second pulses are logically processed to provide a gate pulse (f) as shown in Fig. 2 which has a width $P_G$ corresponding to the width of the flaw echo F. As shown in Fig. 2(e), the width $P_G$ of the gate pulse (f) is equal to the delay time $t_{d2}$ due to the second delay line 32. The reduction of the delay time $t_{d2}$ leads to reduction of the gate pulse width $P_G$.

The predetermined delay time $t_{d1}$ and $t_{d2}$ set by the first and second delay lines 31 and 32, respectively, vary depending upon the flaw detecting conditions and the kind of object under flaw detection as having been described in the foregoing. However, since the first and second delay lines 31 and 32 have their delay time $t_{d1}$ and $t_{d2}$ changeable stepwisely, a desired delay time can be freely selected by selecting a kind of the delay line, the points where the first and second pulses are generated can be set freely and easily, and also the delay time $t_{d2}$ can be shortened according to the width of the flaw echo F. Thus, the first pulse can be made to rise at the point where the gate pulse corresponding to the width of the flaw echo turns on, and the second pulse can be generated at the point where the gate pulse turns off. Also a gate pulse width $P_G$ can be obtained which is reduced to a desired width.

As having been described in the foregoing, the method and apparatus for flaw detection according to the present invention use a peak detector having a first and second delay lines each comprising a single line or plural lines and which are provided sequentially to generate a first and second pulses as delayed a predetermined time from a point where the level of a surface echo has exceeded a threshold, and also utilizes the fact that a gate pulse corresponding to a flaw echo to be inspected turns on and off at the points, respectively, where the first and second pulses have been generated and the fact that the width of the gate pulse thus obtained is equal to the delay time due to the second delay line. Therefore, it is of course not only possible to positively and separately gate surface flaws just below the surface of an object and internal flaws in an extremely thin object but also to gate positively and separately any selected one or ones of plural flaws existent near each other in the direction of the thickness of the object while viewing echoes and pulse waveforms displayed on the CRT screen of, for example, an oscilloscope. So an ultrasonic flaw detection can be done very accurately.

BRIEF DESCRIPTION OF THE DRAWINGS

Fig. 1 is an explanatory drawing of the principle of the ultrasonic method and apparatus for flaw detection, showing the correlation between two sets of delay lines;

Fig. 2 is a characteristic diagram derived from the correlation shown in Fig. 1;

Fig. 3 is a schematic block diagram of the peak detector, showing one embodiment of the method and apparatus for flaw detection according to the present invention;

Fig. 4 is a detailed block diagram of the essential portion in Fig. 3;

Fig. 5 is a characteristic diagram derived when the peak detector shown in Fig. 3 is used;

Fig. 6 is a schematic diagram showing the configuration of the delay line;

Fig. 7 shows, by way of example, echo patterns of plural flaws and gate pulses corresponding to the echo patterns;

Figs. 8 thru 10 are explanatory drawings, respectively, showing another embodiment of the ultrasonic method and apparatus for flaw detection according to the present invention; of which Fig. 8 being a schematic block diagram of the peak detector, similar to that in Fig. 3, Fig. 9 being a detailed block diagram showing the essential portion in Fig. 8, and Fig. 10 being a characteristic diagram derived when the peak detector shown in Fig. 8 is used;

Fig. 11 is a schematic diagram showing the configuration of the ultrasonic flaw detector according to the present invention;

Figs. 12 thru 14 are explanatory drawings of a conventional typical ultrasonic method and apparatus for flaw detection; of which Fig. 12 being a schematic block diagram of the peak detector used in the ultrasonic flaw detector, Fig. 13 showing, by way of example, a detailed block diagram of the essential portion in Fig. 12, and Fig. 14 being a pulse characteristic diagram derived when the peak detector shown in Fig. 12 is used.

## BEST MODE FOR CARRYING OUT THE INVENTION

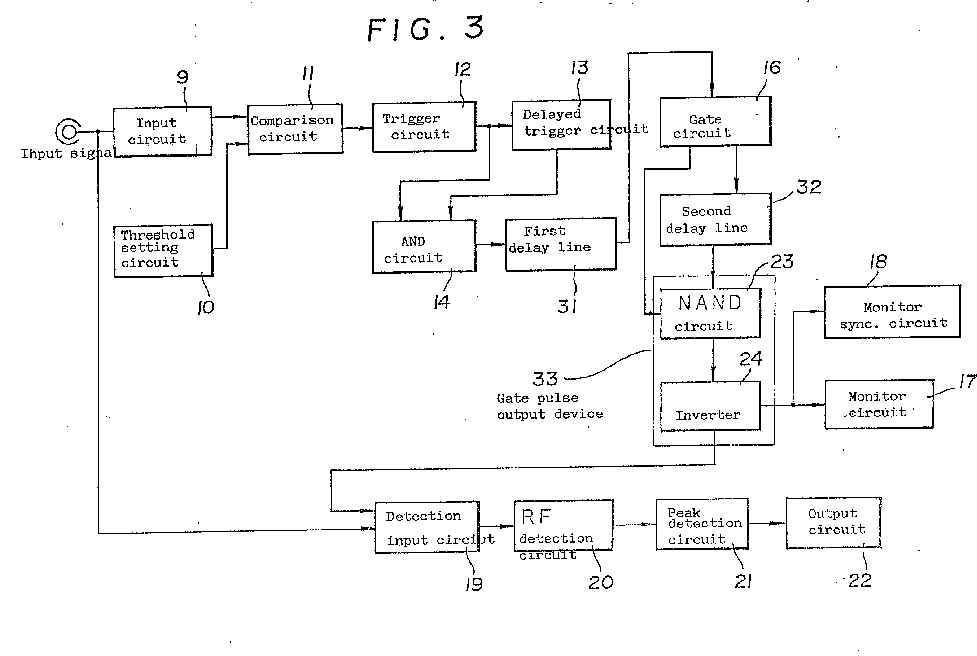

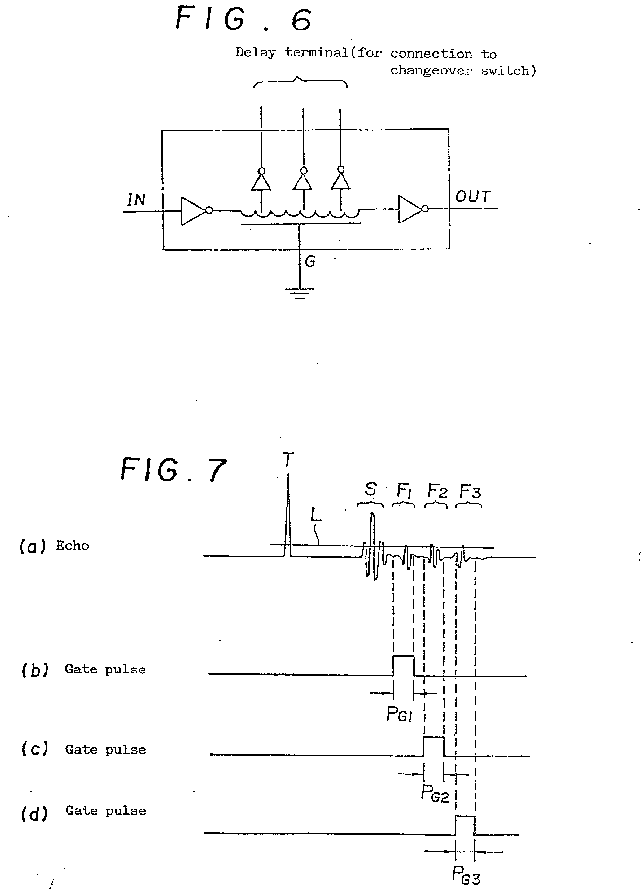

The preferred embodiment of the present invention will be explained with reference to Figs. 3 thru 7. In these Figures, the same elements or elements having the same functions as in Figs. 1 and 2 and Figs. 12 thru 14 are indicated with the same reference numerals as in the latter Figures. In Figures, the reference numeral 31 indicates a first delay line. As shown in Fig. 6, the first delay line has provided therein, for example, plural delay terminals of stepwisely different inductances. These delay terminals are selectively used by a changeover switch provided outside the delay line. An output pulse supplied from the AND circuit 14 to an IN terminal thus selected is delivered as delayed a selected time. The delay time can be freely set as selected from a wide range from second x $10^{-12}$ (P sec) to second x $10^{-3}$ (M sec) through selection of a delay line. Normally, however, a setting range is selected which is suitable for the kind of an object under flaw detection and it is divided to a plurality of steps, for example, about 10 steps, which are selectable by means of the above-mentioned external changeover switch. The reference numeral 32 indicates a second delay line which, similarly to the first delay line 31, has plural delay terminals of stepwisely different inductances. Any of these delay terminals is freely selected by means of the above-mentioned external changeover switch to delay a selected time an output pulse delivered from the $\overline{Q}$ terminal of the multivibrator 16a in the gate circuit 16. In this embodiment, the first delay line 31 and second delay line 32 are a single line, respectively, for they provide each a delay time suitable for flaw detection. The reference numeral 23 indicates a NAND gate which are applied with both output pulses from the multivibrator 16a of the gate circuit 16 and the second delay line 32 to provide an inverted AND pulse, and 24 indicates an inverter which inverts the output pulse from the NAND circuit 23 to delivers it as gate pulse. The gate pulse is supplied to the monitor circuit 17, monitor sync circuit 18 and detection input circuit 19, respectively.

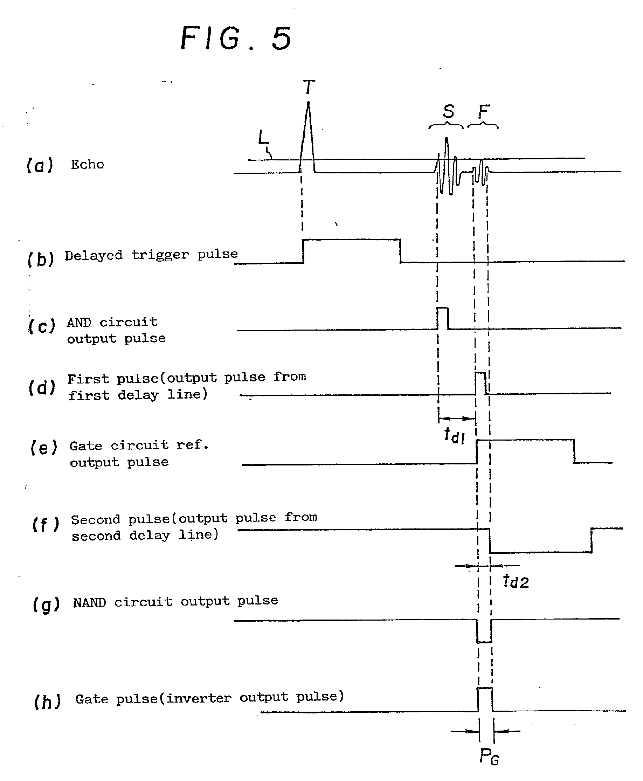

Next, the characteristic diagram of the pulses obtained in the embodiment having the above-mentioned configuration will be explained with reference to Fig. 5. In this Figure, (a) indicates an example echo pattern of the reflected wave from the object. As seen, a surface echo S and flaw echo F appear in the proximity of each other. The echoes correspond to surface flaws or flaws included in an extremely thin object. L indicates a line indicating a threshold for the levels of a transmitted pulse and various echoes. Assume now that the level of a transmitted pulse T exceeds the threshold L. The delayed trigger circuit 13 is tripped to set a delayed trigger pulse (b) and at the same time, an echo (a) from the object 3, which is receivered by the receiver circuit 6, is supplied to the input circuit 9. The output signal from the input circuit 9 is supplied to the trigger circuit 12 via the comparison circuit 11. When the level of this signal exceeds the threshold L, a trigger signal is provided. The trigger signal is supplied to the AND circuit from which it is delivered as ANDed with the above-mentioned delayed trigger pulse also supplied to the AND circuit 14 and a pulse derived from the delayed trigger pulse having passed through a D type flip-flop. This output pulse is an AND circuit output pulse (c) which rises when the level of the surface echo S exceeds the threshold L. The process down to here is the same as that in the conventional ultrasonic method and apparatus for flaw detection provided that the above-mentioned AND circuit output pulse is supplied to the first delay line 31. In the first delay line 31, any one of the plural delay terminals can be freely selected by means of the external changeover switch, the above-mentioned input pulse is delivered as a first pulse (d) delayed a selected time $t_{d1}$ at the selected delay terminal. The first output pulse thus delivered is supplied to the gate circuit 16 to apply the gate circuit reference output pulse (e) set to a predetermined width by the multivibrator 16a, resistor and capacitor in the gate circuit 16 to the NAND circuit 23 of the gate pulse output device 33. On the other hand, simultaneously with the output from the $\overline{Q}$ terminal, the Q terminal of the multivibrator 16a delivers an inverted gate circuit reference output pulse to the second delay line 32. As in the first delay line 31, any one of the delay terminals of the second delay line 32 is freely selected by means of the external changeover switch, thereby delivering the input pulse to the second delay line 32 as a second pulse (f) delayed a selected time $t_{d2}$ and applying this output pulse to the NAND circuit 23. Applied with the output pulse from the Q terminal of the gate circuit 16 and the output pulse from the second delay line 32, the NAND circuit 23 delivers a NAND circuit output pulse (g) of inverted AND. This output pulse is inverted by the inverter 24 to provide an inverter output pulse (h) having a pulse width $P_G$, that is, gate pulse.

The aforementioned delay time $t_{d1}$ and $t_{d2}$ vary depending on the flaw detecting conditions and kind of the object under flaw detection as having previously been described. However, since a delay line and setting range of its delay time suitable for the flaw detecting conditions and kind of the object can be freely selected and the delay time can be freely changed from one to another, the delay time $t_{d1}$ can be set freely and easily according to the relative time points where the surface echo S and flaw echo F appear, while the delay time $t_{d2}$ can be set freely and easily according to a time during which the flaw echo F appears. In this case, the delay time $t_{d1}$ is set to a time including the previously mentioned delay time $t_{PLH}$ for propagation in the multivibrators, etc.

Next, the relation between the delay time $t_{d1}$ and $t_{d2}$ and the gate pulse will be described with reference to Fig. 5. The gate pulse turns on at a point where the first pulse (d) is generated as delayed a time from when the level of the surface echo S has exceeded the threshold L until the gate circuit reference output pulse (e) rise, that is, a time $t_{d1}$ due to the first delay line 31. Also, the gate pulse turns off at a position where the second pulse (f) is generated as delayed a time $t_{d2}$ due to the second delay line 32 from when the gate circuit reference output pulse has fallen. Namely, the gate pulse will turn on when a delay time $t_{d1}$ passes after the level of the surface echo S has exceeded the threshold L, and it will turn off when a further delay time $t_{d2}$ passes after that. On the other hand, since the width $P_G$ of the gate pulse is equal to the delay time $t_{d2}$ in view of the above relation and is increased or decreased proportionally to the delay time $t_{d2}$, it can be freely and easily set to a width corresponding to a time during which the flaw echo F appears before and after the peak of the flaw echo (the peak included) as shown in Fig. 5. Indeed the above-mentioned delay time $t_{d1}$ and $t_{d2}$ and gate pulse width $P_G$ will be affected by the accuracy of the delay time set by the delay lines, resulting a corresponding error, but this error of the delay time due to the delay lines is as small as about 5 ns though it is slightly different from one length to another of the set delay time. Thus, it can be said that the influence on the delay time $t_{d1}$ and $t_{d2}$ and gate pulse width $P_G$ is very small. The accuracy of the delay lines is such that even if the rise point of the gate circuit reference output pulse (e) is influenced by the delay time for internal propagation in the multivibrators of the gate circuit 16, output variation due to temperature change, etc. and the gate pulse (h) rises at a deviated point, the delay time $t_{d1}$ and $t_{d2}$ are not influenced at all because the delay time error is small as mentioned above. Hence, it is possible to freely make the gate pulse appear at a selected point, that is, after a time of about 50 ns (a depth of about 150 μm from the surface of a steel object, for example) from a point where the level of the surface echo S has exceeded the threshold L, and also to shorten the gate pulse width $P_G$ from about 60 to 80 ns (which used to be the minimum limit) with the conventional techniques to, for example, about 30 ns.

The above-mentioned effect also applies to the echo pattern representing plural flaw echoes $F_1$, $F_2$ and $F_3$ from flaws included near each other in an object in the direction of thickness thereof as shown in Fig. 7(a). Namely, when flaw detection is to done sequentially with the flaw echoes $F_1$ to $F_3$, a gate pulse $P_{G1}$ indicated with (b) in Fig. 7 is generated first for the flaw echo $F_1$ in a same processes as the processes (b) to (g) in Fig. 5. After the gate pulse $P_{G1}$ turns off, the circuit recovers the state before the trigger due to the flaw echo $F_1$ has been generated. So, a gate pulse $P_{G2}$ indicated with (c) in Fig. 7 can be generated for the next received flaw echo $F_2$ in the same manner as for the flaw echo $F_1$ and further a gate pulse $P_{G3}$ can be generated for the further received flaw echo $F_3$ indicated with (d) in Fig. 7 in the same manner as for the flaw echoes $F_1$ and $F_2$, thereby permitting to detect the flaws. Next, when only any one of the flaw echoes $F_1$ to $F_3$, for example, $F_2$, is to be used for flaw detection, the processes (b) to (g) shown in Fig. 5 are applied for the flaw echo $F_2$. Thus, the gate pulse $P_{G2}$ can be generated for the flaw echo $F_2$ independently of the flaw echoes $F_1$ and $F_2$. Therefore, it is of course not only possible to positively gate a single flaw, but also to positively gate separately such plural flaws near each other (flaws in, for example, a steel object being spaced about 90 μm). Thus, a highly accurate flaw detection can be done.

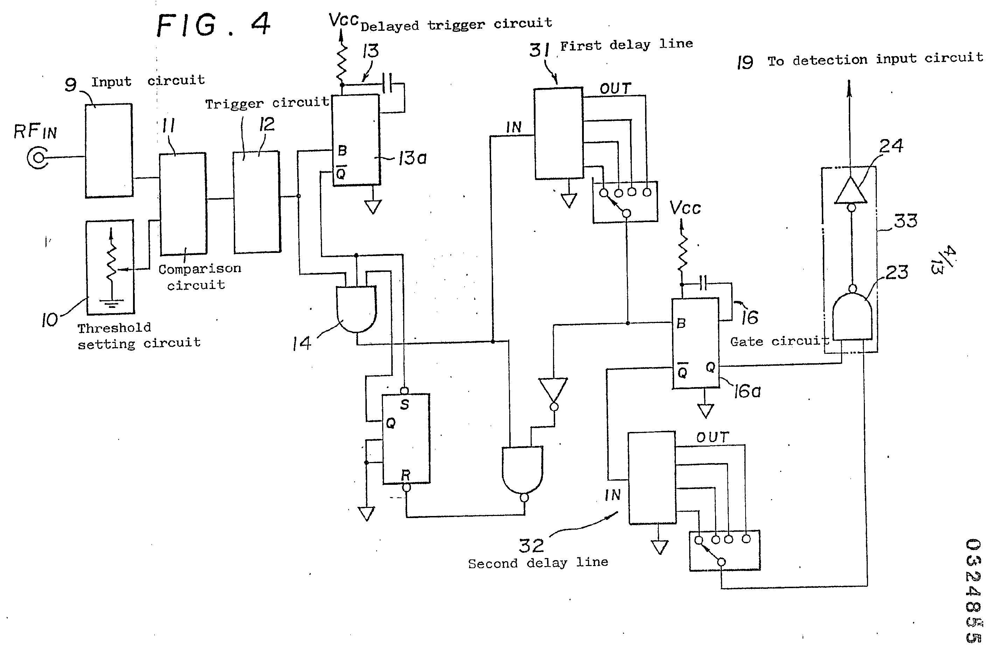

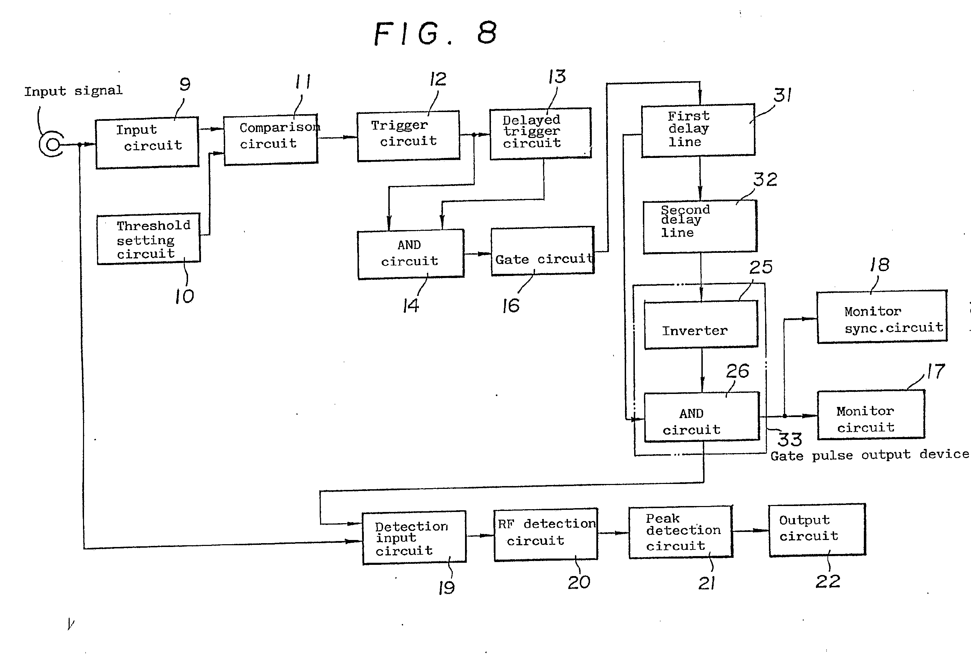

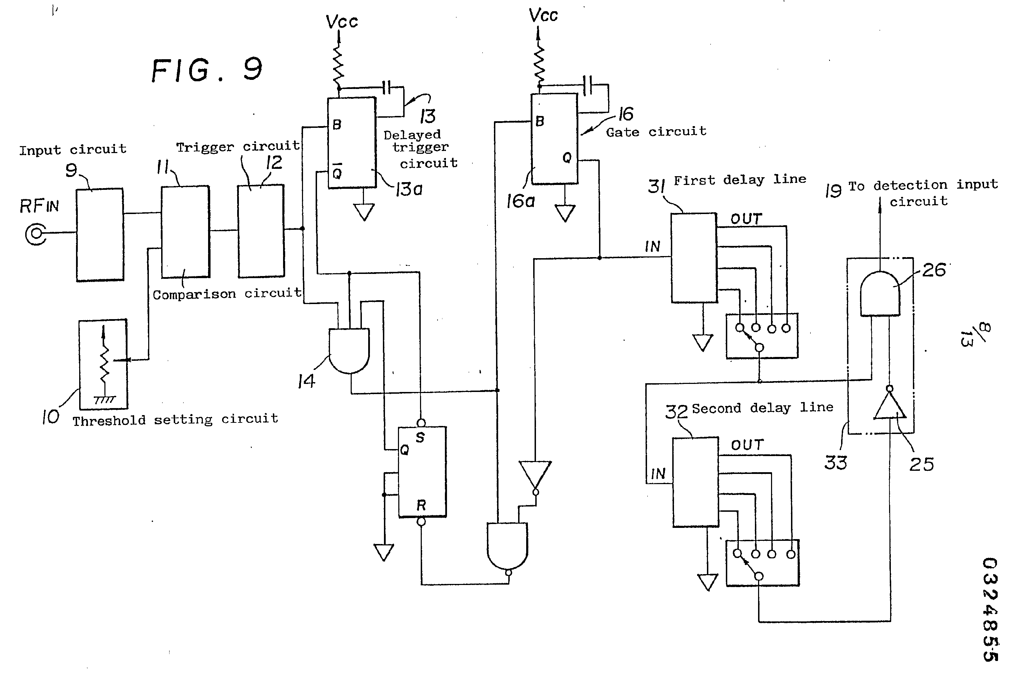

Next, another embodiment of the present invention will be explained with reference to Figs. 8 thru 10. In these Figures, the same elements as in Figs. 3 thru 5 are indicated with same reference numerals as in the latter Figures. Referring now to Figs. 8 and 9, the elements ranging from the input circuit 9 to the AND circuit 14 are the same as in Figs. 3 and 4 showing the first embodiment. The elements downstream of the AND circuit 14 are so arranged that the output from the AND circuit 14 is supplied to the first delay line 31 through the gate circuit
16. The input pulse is delayed a selected time by the first
delay line 32 and then delivered to the second delay line 32
and the AND circuit 26 forming a part of the gate pulse output
device 33. In the second delay line 32, the input pulse is
delayed a selected time and delivered to the AND circuit
through the inverter 25 forming together with the AND circuit
26 the gate pulse output device 33. The output pulse from the
AND circuit 26, that is, a gate pulse, is delivered to the
monitor circuit 17, monitor sync circuit 18 and detection input
circuit 19. The elements ranging down to these circuits and
the output circuit 22 are the same as in Fig. 3.

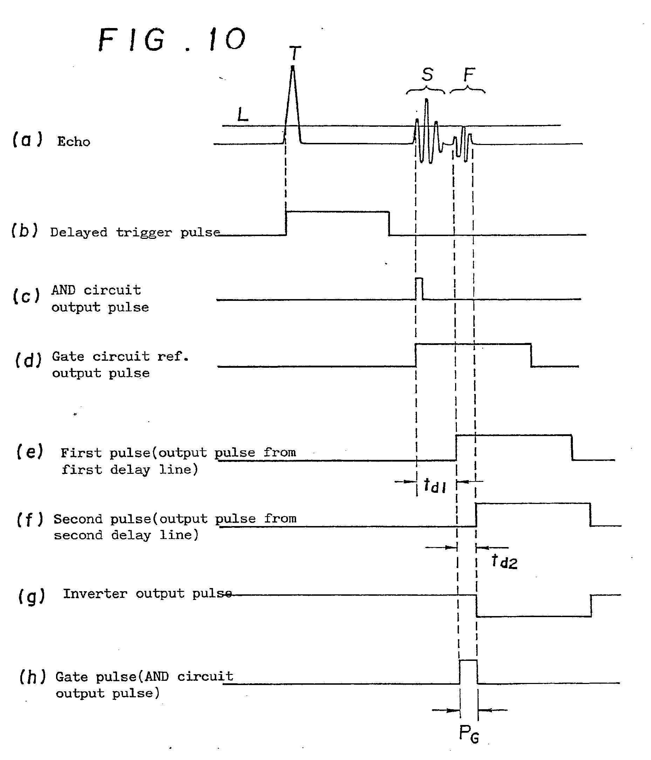

The pulse characteristics obtained in this embodiment will
be explained with reference to Fig. 10. The processes from the
echo (a) to generation of AND Circuit output pulse (c) in Fig.
10 are the same as in Fig. 5 showing the first embodiment
provided that since the AND circuit output pulse (c) is supplied to the first delay line 31 after passing through the gate
circuit 16, the gate circuit reference output pulse (d) rises
nearly simultaneously with the generation of the AND circuit
output pulse (c) and a first pulse (e) delayed a selected time
$t_{d1}$ from the rise point of the AND circuit reference output
pulse (d) is delivered from the first delay line 31. The first
pulse is supplied directly to the second delay line 32 in which
it provides, as in the first delay line 31, a second pulse
delayed a selected time $t_{d2}$ from the point where the first
pulse has been generated. The second pulse thus delivered is supplied to the inverter 25 to provide an inverter output pulse
(g) which is supplied to the AND circuit 26. In this AND
circuit 26 to which the first pulse (e) is supplied, the
inverter output pulse (g) is ANDED with the first pulse (e) to
provide an AND circuit output pulse (h) having a width $P_G$, that
is, a gate pulse.

As seen from Fig. 10 and the description made with reference to this Fig. 10, the gate pulse indicated with (h) in Fig.
10 turns on at a point which is determined with the delay time
due to the above-mentioned delay line which acts with a high
accuracy (in this case, the first delay line 31). So the
turn-on point of the gate pulse can be determined with a high
accuracy and stability, which advantageously permits to detect
the depth of a fine flaw accurately. Thus, the depth of the
fine flaw can be effectively detected with a high accuracy.
The delay time $t_{d1}$ and $t_{d2}$ can be set freely and easily also in
this embodiment as in the first embodiment. The relation
between the delay time $t_{d1}$ and $t_{d2}$ and the gate pulse is such
that the gate pulse turns on when a delay time $t_{d1}$ has passed
after the level of the surface echo S has exceeded the threshold L and it turns off when a further delay time $t_{d2}$ passes
thereafter. Moreover, the gate pulse width $P_G$ is equal to the
delay time $t_{d2}$ and increases/decrease proportionally to the
delay time $t_{d2}$. Thus, also in this embodiment, it is possibly
to positively gate separately surface flaws beneath the surface
of an object, internal flaws in an extremely thin object and
also plural flaws existent near each other in an object in the direction of thickness thereof, whereby an accurate and effective flaw detection can be assured.

The ultrasonic method and apparatus for flaw detection according to the present invention are not limited to the embodiments having been described in the foregoing, but they can be embodied in various forms without departing from the technical spirit of the present invention.

What is claimed is:

1. An ultrasonic method for detecting a flaw or flaws inside an object immersed in a liquid, comprising the following steps of:

generating a trigger signal to provide a trigger when the level of a surface echo from the object under flaw detection has exceeded a preset threshold;

generating a first pulse as delayed, by a delay line, a predetermined time from the point where said trigger signal has been generated;

turning a gate pulse with the rise of said first pulse and simultaneously generating a second pulse as delayed, by another delay line, a predetermined time from the rise point of said first pulse; and

turning off said gate pulse simultaneously with the generation of said second pulse to provide a gate pulse with which the flaw detection is done.

2. A method according to Claim 1, comprising the following steps of:

generating a trigger signal to provide a trigger when the level of a surface echo from the object under flaw detection has exceeded a preset threshold;

generating a first pulse as delayed, by a delay line of which the delay time can be freely set through selection of a delay terminal, a predetermined time from the point where said trigger signal has been generated;

turning on a gate pulse with the rise of said first pulse and simultaneously generating a second pulse as delayed, by another delay line of which the delay time can be freely set through selection of a delay terminal, a predetermined time from the rise point of said first pulse; and

turning off said gate pulse simultaneously with the generation of said second pulse, by logically processing both said first and second pulses, to provide a gate pulse with which the flaw detection is done.

3. An ultrasonic apparatus for detecting a flaw or flaws inside an object immersed in a liquid, having a pulse generation circuit to apply an ultrasound pulse to an ultrasonic probe, a receiver circuit to receive and amplify a reflected wave signal from the object, and a peak detector which detects a peak value of the reflected wave delivered from the receiver circuit and delivers a DC voltage proportional to the peak value, said peak detector comprising:

a trigger circuit which is triggered, to generate a trigger signal, when the level of a surface echo from the object exceeds a preset threshold;

a first delay line for generating a first pulse as delayed a predetermined time from the point where said trigger signal has been generated and at a specified point where a gate pulse is turned on;

a second delay line for generating a second pulse as delayed a predetermined time from the point where said first pulse has been generated and at a specified point where said gate pulse is turned off; and

a gate pulse output device for receiving pulses delivered as delayed by said first and second delay lines and providing a gate pulse having a same width as the delay time due to said second delay line.

4. An apparatus according to Claim 3, said peak detector comprising:

a trigger circuit which is triggered, to generate a trigger signal, when the level of a surface echo from the object exceeds a preset threshold;

a first delay line for generating a first pulse as delayed a predetermined time from the point where said trigger signal has been generated and at a specified point where a gate pulse is turned on;

a second delay line for generating, through a gate circuit which receives said first pulse and provides a reference gate pulse that rises simultaneously with said first pulse and by delaying the output pulse from said gate circuit a predetermined time from the point where said first pulse has been generated, a second pulse at a specified point where said gate pulse is turned off; and

a gate pulse output device for receiving pulses delivered as delayed by said first and second delay lines and providing a gate pulse having a same width as the delay time due to said second delay line.

5. An apparatus according to Claim 3, said peak detector comprising:

a trigger circuit which is triggered, to generate a trigger signal, when the level of a surface echo from the object exceeds a preset threshold;

a first delay line for generating, through a gate circuit which provides a reference gate pulse that rises at the point where said trigger signal has been generated, a first pulse as delayed a predetermined time from the point where the output pulse from said gate circuit has been generated and at a specified point where a gate pulse is turned on;

a second delay line for generating a second pulse as delayed a predetermined time from the point where said first pulse has been generated and at a specified point where said gate pulse is turned off; and

a gate pulse output device for receiving pulses delivered as delayed by said first and second delay lines and providing a gate pulse having a same width as the delay time due to said second delay line.

# FIG. 1

31

32

Trigger signal → | First delay line | → | Second delay line |

First pulse

Second pulse

| Gate pulse output device |

33

Gate pulse

# FIG. 2

(a) Echo

(b) Delayed trigger pulse

$P_t$

(c) Trigger signal

(d) First pulse

$t_{d1}$

(e) Second pulse

$t_{d2}$

(f) Gate pulse

$P_G$

# FIG. 3

Input signal

| | | | | |
|---|---|---|---|---|
| Input circuit (9) | Comparison circuit (11) | Trigger circuit (12) | Delayed trigger circuit (13) | Gate circuit (16) |

Threshold setting circuit (10)

AND circuit (14)

First delay line (31)

Second delay line (32)

NAND circuit (23)

33 — Gate pulse output device

Inverter (24)

Monitor sync. circuit (18)

Monitor circuit (17)

Detection input circuit (19)

RF detection circuit (20)

Peak detection circuit (21)

Output circuit (22)

3/13

032485·5

FIG. 4

9 Input circuit

Vcc Delayed trigger circuit
13

Trigger circuit
12

11

13a

RF_IN

Comparison circuit

10

Threshold setting circuit

14

31 First delay line

OUT
IN

Vcc

16

B

Q̄   Q

16a

Gate circuit

19 To detection input circuit

24

33

23

S
Q

R

32
Second delay line

OUT
IN

4/13

0324855

# FIG. 5

(a) Echo

(b) Delayed trigger pulse

(c) AND circuit output pulse

(d) First pulse(output pulse from first delay line)

(e) Gate circuit ref. output pulse

(f) Second pulse(output pulse from second delay line)

(g) NAND circuit output pulse

(h) Gate pulse(inverter output pulse)

# FIG. 6

Delay terminal(for connection to changeover switch)

IN ⟩∘ ⌇⌇⌇⌇ ⟩∘ OUT

G

# FIG. 7

T

S  F₁ F₂ F₃

(a) Echo

L

(b) Gate pulse

P_{G1}

(c) Gate pulse

P_{G2}

(d) Gate pulse

P_{G3}

FIG. 8

# FIG. 9

Input circuit 9

RF IN

Trigger circuit 11

Comparison circuit

12

Threshold setting circuit 10

Vcc

B 13 Delayed trigger circuit

Q̄ 13a

14

Q S

R

Vcc

B 16 Gate circuit

Q 16a

31 First delay line

IN OUT

32 Second delay line

IN OUT

33

26

25

19 To detection input circuit

8/13

0324855

# FIG. 10

(a) Echo

(b) Delayed trigger pulse

(c) AND circuit output pulse

(d) Gate circuit ref. output pulse

(e) First pulse(output pulse from first delay line)

(f) Second pulse(output pulse from second delay line)

(g) Inverter output pulse

(h) Gate pulse(AND circuit output pulse)

$t_{d1}$  $t_{d2}$  $P_G$  $S$  $F$  $L$  $T$

# FIG. 11

# FIG. 12

Input signal → **Input circuit** (9) → **Comparison circuit** (11) → **Trigger circuit** (12) → **Delayed trigger circuit** (13)

**Threshold setting circuit** (10)

**AND circuit** (14) → **Delay circuit** (15) → **Gate circuit** (16) → **Monitor circuit** (17)

**Monitor sync. circuit** (18)

**Detection input circuit** (19) → **RF detection circuit** (20) → **Peak detection circuit** (21) → **Output circuit** (22)

11/13

032485S

FIG. 13

0324855

# FIG. 14

(a) Echo

(b) Delayed trigger pulse

$P_t$

(c) AND circuit output pulse

(d) Delayed pulse

$P_d$

$t_{PLH}$

(e) Gate pulse

$P_g$

$t_{PLH}$

0324855

# INTERNATIONAL SEARCH REPORT

International Application No   PCT/JP87/00664

**I. CLASSIFICATION OF SUBJECT MATTER** (if several classification symbols apply, indicate all) 3

According to International Patent Classification (IPC) or to ooth National Classification and IPC

Int.Cl$^4$   G01N29/04

**II. FIELDS SEARCHED**

| Minimum Documentation Searched 4 | |
|---|---|
| Classification System | Classification Symbols |
| IPC | G01N29/04 |

| Documentation Searched other than Minimum Documentation to the Extent that such Documents are Included in the Fields Searched 5 | |
|---|---|
| Jitsuyo Shinan Koho | 1967 – 1986 |
| Kokai Jitsuyo Shinan Koho | 1971 – 1986 |

**III. DOCUMENTS CONSIDERED TO BE RELEVANT** 14

| Category * | Citation of Document, 16 with indication, where appropriate, of the relevant passages 17 | Relevant to Claim No. 18 |
|---|---|---|
| X | US, A, 3,262,306 (Branson Instrument, Inc.) 26 July 1966 (26. 07. 66) Column 2, line 67 to column 3, line 59 | 1-5 |

* Special categories of cited documents: 15

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure. use. exhibition or other means

"P"  document published prior to the international filing date but later than the priority date claimed

"T"  later document published after the international filing date or priority date and not in conflict with the application but cited to understand the principle or theory underlying the invention

"X"  document of particular relevance: the claimed invention cannot be considered novel or cannot be considered to involve an inventive step

"Y"  document of particular relevance: the claimed invention cannot be considered to involve an inventive step when the document is combined with one or more other such documents. such combination being obvious to a person skilled in the art

"&"  document member of the same patent family

**IV. CERTIFICATION**

| Date of the Actual Completion of the International Search 2 | Date of Mailing of this International Search Report 2 |
|---|---|
| November 24, 1987 (24.11.87) | December 7, 1987 (07.12.87) |
| International Searching Authority 1 | Signature of Authorized Officer 20 |
| Japanese Patent Office | |